# EUROPEAN PATENT SPECIFICATION

(11) **EP 3 202 988 B1**
(45) Date of publication and mention of the grant of the patent: **01.07.2020**
(21) Application number: 16001918.8
(22) Date of filing: 01.09.2016
(51) Int. Cl.: E03C 1/05, E03C 1/04

(54) **AN OUTLET DEVICE WITH AN ELECTRONIC OUTLET AND A MECHANICAL OUTLET MODE**
AUSGABEVORRICHTUNG MIT EINEM ELEKTRONISCHEN UND EINEM MECHANISCHEN AUSGABEMODUS
DISPOSITIF DE SORTIE À UNE MODE DE SORTIE ÉLECTRONIQUE ET UNE MODE DE SORTIE MÉCANIQUE

(30) Priority: 03.02.2016 CN 201610075728
(43) Date of publication of application: 09.08.2017
(73) Proprietor: Xiamen Solex High-Tech Industries Co., Ltd., Xiamen Area of China (Fujian) Pilot Free Trade Zone (CN)
(72) Inventor: HONG, Chunjie, Fujian 361000 (CN); HU, Lihong, Fujian 361000 (CN); YUAN, Shanlu, Fujian 361000 (CN)
(74) Representative: Verscht, Thomas Kurt Albert

(56) References cited:
- EP-A1- 3 162 968
- WO-A2-2007/124438
- WO-A2-2013/134525
- US-B1- 9 010 377

## Description

### Field of the invention

The present disclosure relates to an outlet device, especially to an outlet device that can be automatically closed when the outlet volume reaches to a certain value.

### Background of the invention

In the modern society, electronic taps, such as infrared sensing taps, are more and more popular in the public places, user can only put the hand below the tap, water will automatically flow out. Traditional electronic taps have only electronic outlet one mode, once the electronic system fails, the tap can not be used. It can be avoided if the electronic tap is further disposed with a mechanical outlet switch. Moreover, the traditional electronic tap can not be turned off, when washing the wash basin or the tap, the tap will be always turned on because of the infrared sensing, which causes water wasting.

In addition, people require higher to the life; baking, cooking, making tea or coffee are necessary in the daily life. Especially in the western-style baking, it has strict rules to the ingredients and the flow of water. User usually needs a measuring cup to get the water. It often happens that when you take the measuring cup under the tap to get the water, the measuring cup is filled up in one second when in high flow volume, it far exceeds the needed volume, which may waste the water. When in low flow volume, it gets slowly, during the process, the user needs to take care of the volume in the cup to turn off the tap, it is a waste of time and labor. To solve the problems, a rationed tap exists in the market, this rationed tap can supply rationed flow volume according to the setting, the tap is turned off after the flow volume reaches to the preset value, so that the user needn't to take care of the volume. However, existing rationed tap is usually disposed with a flow adjusting portion, the user adjusts the proper flow volume and the water flows out. But misoperation may happen, the user adjusts the flow volume, but he doesn't get ready to get the water, water still flows out of the tap, it causes inaccurate of the water volume.

In document US 9,010,377 B1 an electronic plumbing fixture fitting is disclosed. The electronic plumbing fixture fitting comprises a discharge outlet, an electronic valve, a first proximity sensor, and a second proximity sensor. The discharge outlet is operable to deliver water to a user. The electronic valve is operable to permit flow of water through the discharge outlet when the electronic valve is activated and to prevent flow of water through the discharge outlet when the electronic valve is deactivated. The first proximity sensor defines a first zone and is operable to activate the electronic valve when an object enters the first zone. The second proximity sensor defines a second zone and is operable to activate the electronic valve when an object enters the second zone.

### Summary of the invention

The present disclosure is provided with an outlet device with electronic outlet and mechanical outlet two modes to solve the main technical problem, the present disclosure can be freely switched in electronic outlet and mechanical outlet two modes, when the user uses the mechanical outlet mode, the electronic outlet mode is automatically interrupted so as to ensure that both outlet modes do not interfere.

Another technical problem of the present invention to solve is that the electronic outlet mode is further designed to be rationed outlet, the rationed volume option and the outlet control are applied with two independent switches, which avoids misoperation.

To solve above mentioned technical problems, the present invention is provided with an outlet device with electronic outlet and mechanical outlet two modes, wherein the outlet device comprises a mechanical outlet control device, an electronic outlet control device and a central control module;
the central control module comprises a first outlet passage controlled by the mechanical outlet control device, a second outlet passage controlled by the electronic outlet control device and a central controller; the first outlet passage is disposed with a sensor, the second outlet passage is disposed with an electromagnet valve;
when the mechanical outlet control device controls the first outlet passage to open, the sensor detects water flowing in the first outlet passage, whether the electromagnet valve opens or not, the central controller switches the electromagnet valve to normal close state, wherein the second outlet passage is further disposed with a flow meter.

The present disclosure further provides with an outlet device with electronic outlet and mechanical outlet two modes, the outlet device comprises a mechanical outlet control device, an electronic outlet control mode and a central control module;
the central control module comprises a first outlet passage controlled by the mechanical outlet control device, a second outlet passage controlled by the electronic outlet control device and a central controller; the mechanical outlet control device is disposed with a sensor, the second outlet passage is disposed with an electromagnet valve;
when the mechanical outlet control device controls the first outlet passage to open, the sensor detects position change of the mechanical outlet control device, whether the electromagnet valve opens or not, the central controller switches the electromagnet valve to normal close state, wherein the second outlet passage is further disposed with a flow meter.

In another preferred embodiment, the electronic outlet control device is disposed with an electronic outlet control switch and a volume option switch; one end of the second outlet passage is a cool water inlet, the other end is an outlet connected to the outlet device;
the volume option switch is linked to an encoder, the encoder is disposed with a unlimited outlet gear and a plurality of rationed outlet gears;
the electronic outlet control switch and the volume option switch are independently disposed, the volume option switch drives the encoder to set in a proper outlet gear, the electronic outlet control switch is operated to make the central controller turn on the electromagnet valve, the flow meter starts to count.

In another preferred embodiment, the volume option switch is a rotating ring disposed at one side of the outlet portion of the outlet device, the rotating ring is disposed with a volume dividing ruler, the outlet port of the outlet device is disposed with a marker; the volume dividing ruler is disposed with a scale corresponding to the unlimited outlet gear and a plurality of scales corresponding to the rationed outlet gear; when the rotating ring rotates to make one of the scales align with the marker, the corresponding outlet gear is selected.

In another preferred embodiment, when the volume option switch rotates to one side, the encoder rotates to the unlimited outlet gear; when the volume option switch rotates to the other side, the encoder rotates to one of the rationed outlet gears.

In another preferred embodiment, when the encoder rotates to the unlimited outlet gear, the central controller switches the electromagnet valve to normal close state.

In another preferred embodiment, the electronic outlet control switch comprises a touch switch; when the encoder is disposed in any rationed outlet gear, touching the touch switch is capable of turning the electromagnet valve on, the volume meter starts to count, when the volume reaches to the setting value of the rationed outlet gear, the central controller controls to close the outlet valve to turn off.

In another preferred embodiment, the outlet device is a tap or a shower head.

In another preferred embodiment, the sensor is an angle sensor or a displacement sensor.

Prepared to existing known technology, the technical proposal of the present invention has advantages as follows:
1. The present invention is provided with an outlet device with electronic outlet and mechanical outlet two modes, it is disposed with the electronic outlet control device and the mechanical outlet device, therefore it can realize electronic outlet and mechanical outlet, it ensures that if there is a failure to the electronic outlet, the mechanical outlet mode can still work. Besides, when the user uses the mechanical outlet mode, the electronic outlet mode is automatically invalid, two functions are independent, the outlet stability is guaranteed.
2. The present invention is provided with an outlet device with electronic outlet and mechanical outlet two modes, the electronic outlet mode is a rationed outlet mode. The volume option switch is linked to the encoder, the encoder is disposed with the unlimited outlet gear and a plurality of rationed outlet gears. Therefore, when the volume option switch is disposed to the corresponding gear, the user can freely switch it between the rationed outlet mode and the unlimited outlet mode. As the volume switch and the volume control are applied with two independent switches, the user needs to turn on the outlet control switch after he chooses the volume, this two-stage operation efficiently avoids misoperation.
3. The present invention is provided with an outlet device with electronic outlet and mechanical outlet two modes, the rationed portion is an electronic only device, the encoder sends the volume the user chooses to the central controller, when the user operates the electronic outlet control switch, the central controller controls to turn on the electromagnetic valve and the volume meter starts to count, when it counts to the target volume of the current gear, the central controller controls to turn off the electromagnetic. This all-electronic control guarantees the accuracy of the volume count.
   Moreover, the temperature adjusting function is added to the mechanical outlet mode, it improves the outlet variety of the outlet device. When the user chooses the unlimited outlet gear, the electronic outlet mode is invalid; when user rotates the handle to achieve mechanical outlet mode, if he continues to rotate the handle, the outlet temperature rises, it satisfies the needs of user using the warm water and enriches the user experience.
4. The present invention is provided with an outlet device with electronic outlet and mechanic outlet two modes, the outlet control switch is applied with a touch switch, the sensing area is small, it needs user to accurately touch to trigger outlet, thus avoiding misoperation.
5. The present invention is provided with an outlet device with electronic outlet and mechanic outlet two modes, the outlet device can be a tap, a shower head or other normal outlet device, it has wide applicability.

### Brief description of the drawings

FIG.1 illustrates a schematic diagram of the waterway of a preferred embodiment of the present invention.

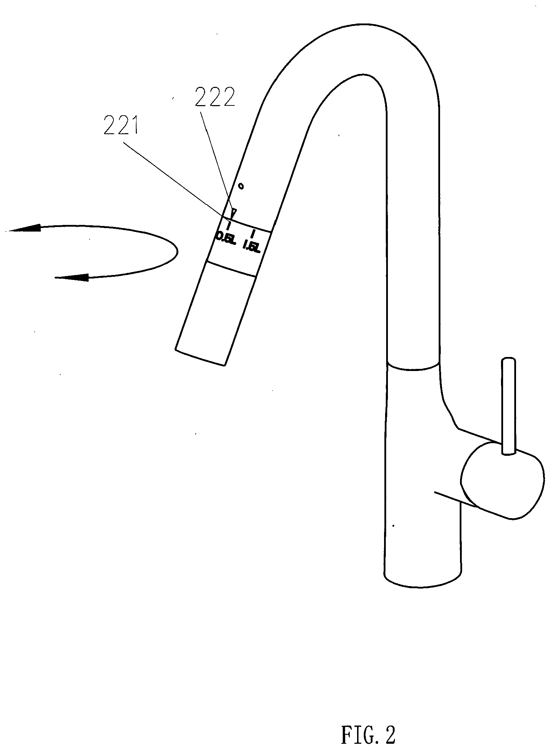

FIG.2 illustrates a schematic diagram of the preferred embodiment of the present invention in rationed outlet.

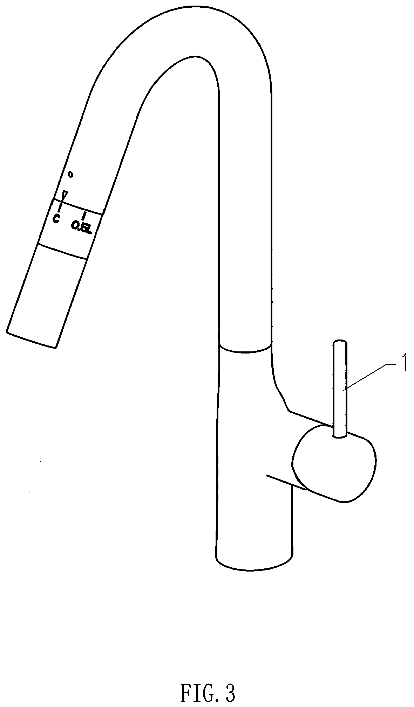

FIG.3 illustrates a schematic diagram of the preferred embodiment of the present invention in close state.

### Detailed description of the embodiments

The present invention will be further described with the drawings and the embodiments.

### The first embodiment:

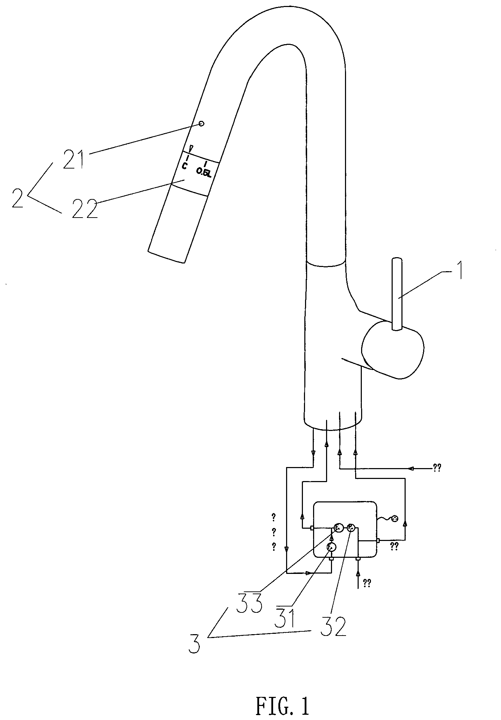

Referring to FIGs 1∼3, a kitchen tap with electronic outlet and mechanical outlet two modes comprises a mechanical outlet control device 1, an electronic outlet control device 2 and a central control module 3;

The central control module 3 comprises first outlet passage controlled by the mechanical outlet device 1, a second outlet passage controlled by the electronic outlet control device 2 and a central controller; the first outlet passage is disposed with a sensor 31, the second outlet passage is disposed with an electromagnetic valve 32;

When the mechanical outlet control device controls to turn on the first outlet passage, the sensor detects water flowing in the first outlet passage, whether the electromagnetic valve 32 opens or not, the central controller switches the electromagnetic valve 32 to normal close state immediately. So that the mechanical outlet is prior than the electronic outlet, two outlet modes are independent that they would not interfere to each other. And with the mechanical outlet, even if the electronic outlet fails, the kitchen tap can be still normally used.

In this embodiment, the electronic outlet control device 2 is provided with rationed outlet function, in detailed, it comprises an electronic outlet control switch 32, a volume option switch 22; the second outlet passage is further disposed with a volume meter 33, one end of the second outlet passage is cool water inlet, the other end is connected to the outlet of the kitchen tap;

The volume option switch 22 is linked to the encoder, the encoder is disposed with an unlimited outlet gear and a plurality of rationed outlet gears.

The electronic outlet control switch 21 and the volume option switch are independent, when the volume option switch 22 drives the encoder to a proper outlet gear, operating the electronic outlet control switch 21 can make the central controller turn on the electromagnetic valve 32, the volume meter 33 starts to count; when the volume meter 33 counts to the target volume set by the encoder, the central controller turns off the electromagnetic valve 32, thus achieving rationed outlet.

In this embodiment, the volume option switch is a rotating ring 22 disposed at one side of the outlet portion of the kitchen tap, the rotating ring 22 is disposed with a volume dividing ruler 221, the outlet portion of the kitchen tap is disposed with a marker 222. the volume dividing ruler 222 is disposed with a scale C corresponding to the unlimited outlet gear and scales 0.5L, 1L, 1.5L,,, corresponding to the rationed outlet gears; when the rotating ring 22 rotates to make the scale of the volume dividing ruler align with the marker, it indicates the present outlet flow volume.

Furthermore, when the rotating ring 22 rotates to one side, the encoder rotates to the unlimited outlet gear; when the rotating ring 22 rotates to the other side, the encoder rotates to one of the rationed outlet gears. By different rotating directions, the user can choose the unlimited outlet gear or the rationed outlet gear easily, the user experience is better.

If the mechanical outlet control device 1 is closed and the user turns on the outlet control switch 21 by accident, water will flows out of the kitchen tap, that is to say, when the mechanical outlet control device 1 is closed, the electronic outlet control device 2 is always available, this situation isn't suitable, misoperation easily happens when the user is washing the kitchen tap. To solve the problem, this embodiment is further provided that: when the encoder is rotates to the unlimited outlet gear, the central controller switches the electromagnetic valve 32 to normal close state. Therefore, the user just needs to rotate the rotating ring 22 to the unlimited outlet gear to turn off the electronic outlet mode, so that the kitchen tap will turn to a mechanical traditional tap, the tap would not turned on when washing the tap or the washbasin.

In this embodiment, the electronic outlet control switch 21 is a touch switch, press switch or infrared switch are available, they are simple substitutions of this embodiment that it would not be further described.

As a traditional kitchen tap has cool water outlet and hot water outlet two modes, for that in this embodiment, the first outlet passage comprises a cool water inlet, a hot water inlet and a mixing water outlet; the mixing water outlet is connected to the second outlet passage, the sensor 31 is disposed at the end of the mixing water outlet of the first outlet passage.

Correspondingly, the mechanical outlet control device 1 comprises a handle, when rotating the handle, the first outlet passage is open, when continuously rotating the handle, the proportion of cool water of the first outlet passage decreases and the proportion of hot water increases to make the outlet temperature of the outlet device rise.

The working process of the kitchen tap is as follows:
1. The mechanical outlet control mode: when rotating the handle, the first outlet passage is open, water inside is cool water; when continuously rotating the handle, the flowing area of the cool water inlet is decreased, the flowing area of the hot water inlet is increased, form the mixing water in the first outlet passage. The outlet temperature of the kitchen tap rises with the rotating of the handle. When the sensor 31 detects water flowing in the first outlet passage, the electromagnetic valve 32 is always turned off, however the user adjusts the rotating ring 22 or touches the touch switch, the electronic outlet mode would not be triggered. It guarantees the highest priority of the mechanical outlet mode, the outlet mode is single and stable.
2. The electronic outlet control mode: be sure that the handle is in close state, the sensor 31 detects no water flowing in the first outlet passage. when the user rotating the rotating ring 22, it drives the encoder to the proper outlet gear, touching the touch switch can make the central controller turn on the electromagnetic valve, the volume meter 33 starts to count; when the volume meter 33 counts to the target volume set by the encoder, the central controller turns off the electromagnetic valve 32 to achieve rationed outlet.
3. Close mode: when the user rotates the rotating ring 22 to unlimited outlet mode, the electronic outlet control mode is turned off, if the mechanical outlet control device is turned off, no water flows out of the kitchen tap.

It should be noted that, this embodiment takes rationed tap for example, other electronic-mechanical double-switch taps are available to apply with above control idea, they are within the scope of the present invention.

### The second embodiment:

This embodiment is different from the first embodiment in that: it is applied in a shower head but not a kitchen tap, the principle and the basic structure are similar, it only needs to design the shower head structure.

### The third embodiment;

This embodiment is different from the first embodiment in that: the handle is disposed with an angle sensor or a displacement sensor, when the user lifts or rotates the handle, the angle sensor or the displace sensor can detect that the first outlet passage is turned on, so that the central controller controls the electromagnetic valve to be in normal close state, the rest part of this embodiment is similar to the first embodiment.

The invention may be summarized as follows: The present invention is provided with an outlet device with electronic outlet and mechanical outlet two modes, the outlet device comprises a mechanical outlet control device, an electronic outlet control device and a central control module; the central control module comprises a first outlet passage controlled by the mechanical outlet control device, a second outlet passage controlled by the electronic outlet control device and a central controller; the first outlet passage is disposed with a sensor, the second outlet passage is disposed with an electromagnet valve; when the mechanical outlet control device controls the first outlet passage to open, the sensor detects water flowing in the first outlet passage, whether the electromagnet valve opens or not, the central controller switches the electromagnet valve to normal close state. The outlet device can be freely switched between the electronic outlet mode and the mechanical outlet mode, when the user uses the mechanical outlet mode, the electronic outlet mode is automatically invalid that it guarantees that two outlet modes are independent without interference.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. An outlet device with electronic outlet and mechanical outlet two modes, wherein the outlet device comprises a mechanical outlet control device (1), an electronic outlet control device (2) and a central control module (3);
the central control module (3) comprises a first outlet passage controlled by the mechanical outlet control device (1), a second outlet passage controlled by the electronic outlet control device (2) and a central controller; the first outlet passage is disposed with a sensor (31), the second outlet passage is disposed with an electromagnet valve (32);
when the mechanical outlet control device (1) controls the first outlet passage to open, the sensor (31) detects water flowing in the first outlet passage, whether the electromagnet valve (32) opens or not, the central controller switches the electromagnet valve (32) to normal close state, **characterized in that** the second outlet passage is further disposed with a flow meter.

2. An outlet device with electronic outlet and mechanical outlet two modes, wherein the outlet device comprises a mechanical outlet control device (1), an electronic outlet control device (2) and a central control module (3);
the central control module (3) comprises a first outlet passage controlled by the mechanical outlet control device (1), a second outlet passage controlled by the electronic outlet control device (2) and a central controller; the mechanical outlet control device (1) is disposed with a sensor (31), the second outlet passage is disposed with an electromagnet valve (32);
when the mechanical outlet control device (1) controls the first outlet passage to open, the sensor (31) detects position change of the mechanical outlet control device (1), whether the electromagnet valve (32) opens or not, the central controller switches the electromagnet valve (32) to normal close state, **characterized in that** the second outlet passage is further disposed with a flow meter.

3. The outlet device with electronic outlet and mechanical outlet two modes according to claim 1 or claim 2, wherein the electronic outlet control device (2) is disposed with an electronic outlet control switch (21) and a volume option switch (22); one end of the second outlet passage is a cool water inlet, the other end is an outlet connected to the outlet device; the volume option switch (22) is linked to an encoder, the encoder is disposed with a unlimited outlet gear and a plurality of rationed outlet gears;
the electronic outlet control switch (21) and the volume option switch (22) are independently disposed, the volume option switch (22) drives the encoder to set in a proper outlet gear, the electronic outlet control switch (21) is operated to make the central controller turn on the electromagnet valve (32), the flow meter starts to count.

4. The outlet device with electronic outlet and mechanical outlet two modes according to claim 3, wherein the volume option switch (22) is a rotating ring (22) disposed at one side of the outlet portion of the outlet device, the rotating ring (22) is disposed with a volume dividing ruler (221), the outlet port of the outlet device is disposed with a marker (222); the volume dividing ruler (211) is disposed with a scale corresponding to the unlimited outlet gear and a plurality of scales corresponding to the rationed outlet gear; when the rotating ring (22) rotates to make one of the scales align with the marker (222), the corresponding outlet gear is selected.

5. The outlet device with electronic outlet and mechanical outlet two modes according to claim 4, wherein when the volume option switch (22) rotates to one side, the encoder rotates to the unlimited outlet gear; when the volume option switch (22) rotates to the other side, the encoder rotates to one of the rationed outlet gears.

6. The outlet device with electronic outlet and mechanical outlet two modes according to any one or more of claims 3 to 5, wherein when the encoder rotates to the unlimited outlet gear, the central controller switches the electromagnet valve (32) to normal close state.

7. The outlet device with electronic outlet and mechanical outlet two modes according to any one or more of claims 3 to 6, wherein the electronic outlet control switch (21) comprises a touch switch; when the encoder is disposed in any rationed outlet gear, touching the touch switch is capable of turning the electromagnet valve (32) on, the volume meter (33) starts to count, when the volume reaches to the setting value of the rationed outlet gear, the central controller controls to close the outlet valve to turn off.

8. The outlet device with electronic outlet and mechanical outlet two modes according to any one or more of claims 1 to 7, in particular according to claim 7, wherein the first outlet passage comprises a cool water inlet, a hot water inlet and a mixing water outlet; the mixing water outlet is connected to the second outlet passage, the sensor (31) is disposed at the end of the mixing water outlet of the first outlet passage.

9. The outlet device with electronic outlet and mechanical outlet two modes according to claim 8, wherein the mechanical outlet control device (1) comprises a handle; when the handle is rotated, the first outlet passage is open, when continuously rotating the handle, the proportion of cool water of the first outlet passage decreases and the proportion of hot water increases to make the outlet temperature of the outlet device rise,

10. The outlet device with electronic outlet and mechanical outlet two modes according to any one or more of claims 1 to 9, in particular according to claim 1 or claim 2, wherein the outlet device is a tap or a shower head.

11. The outlet device with electronic outlet and mechanical outlet two modes according to any one or more of claims 2 to 10, wherein the sensor (31) is an angle sensor or a displacement sensor.

## Patentansprüche

1. Eine Auslasseinrichtung mit zwei Betriebsarten für elektronischen Auslass und mechanischen Auslass, wobei die Auslasseinrichtung eine mechanische Auslasssteuereinrichtung (1), eine elektronische Auslasssteuereinrichtung (2) und ein zentrales Steuermodul (3) aufweist;
das zentrale Steuermodul (3) weist einen ersten Auslassdurchlass. der durch die mechanische Auslasssteuereinrichtung (1) gesteuert wird, einen zweiten Auslassdurchlass, der durch die elektronische Auslasssteuereinrichtung (2) gesteuert wird, und eine zentrale Steuereinrichtung auf; der erste Auslassdurchlass ist mit einem Sensor (31) angeordnet, der zweite Auslassdurchlass ist mit einem Elektromagnetventil (32) angeordnet;
wenn die mechanische Auslasssteuereinrichtung (1) den ersten Auslassdurchlass zum Öffnen steuert, detektiert der Sensor (31) in dem ersten Auslassdurchlass fließendes Wasser, ob das Elektromagnetventil (32) öffnet oder nicht, die zentrale Steuereinrichtung schaltet das Elektromagnetventil (32) in den normalen geschlossenen Zustand, **dadurch gekennzeichnet, dass** der zweite Auslassdurchlass ferner mit einem Strömungsmesser angeordnet ist.

2. Eine Auslasseinrichtung mit zwei Betriebsarten für elektronischen Auslass und mechanischen Auslass, wobei die Auslasseinrichtung eine mechanische Auslasssteuereinrichtung (1), eine elektronische Auslasssteuereinrichtung (2) und ein zentrales Steuermodul (3) aufweist;
das zentrale Steuermodul (3) weist einen ersten Auslassdurchlass, der durch die mechanische Auslasssteuereinrichtung (1) gesteuert wird, einen zweiten Auslassdurchlass, der durch die elektronische Auslasssteuereinrichtung (2) gesteuert wird, und eine zentrale Steuereinrichtung auf; die mechanische Auslasssteuereinrichtung (1) ist mit einem Sensor (31) angeordnet, der zweite Auslassdurchlass ist mit einem Elektromagnetventil (32) angeordnet;
wenn die mechanische Auslasssteuereinrichtung (1) den ersten Auslassdurchlass zum Öffnen steuert, detektiert der Sensor (31) eine Positionsänderung der mechanischen Auslasssteuereinrichtung (1), ob das Elektromagnetventil (32) öffnet oder nicht, die zentrale Steuereinrichtung schaltet das Elektromagnetventil (32) in den normalen geschlossenen Zustand, **dadurch gekennzeichnet, dass** der zweite Auslassdurchlass ferner mit einem Strömungsmesser angeordnet ist.

3. Die Auslasseinrichtung mit zwei Betriebsarten für elektronischen Auslass und mechanischen Auslass nach Anspruch 1 oder Anspruch 2, wobei die elektronische Auslasssteuereinrichtung (2) mit einem elektronischen Auslasssteuerschalter (21) und einem Volumenoptionsschalter (22) angeordnet ist; ein Ende des zweiten Auslassdurchlasses ist ein Kaltwassereinlass, das andere Ende ist ein Auslass, welcher mit der Auslasseinrichtung verbunden ist;
der Volumenoptionsschalter (22) ist mit einem Kodierer verbunden, der Kodierer ist mit einer unbegrenzten Auslassgangstufe und einer Vielzahl von rationierten Auslassgangstufen angeordnet;
der elektronische Auslasssteuerschalter (21) und der Volumenoptionsschalter (22) sind unabhängig angeordnet, der Volumenoptionsschalter (22) treibt den Kodierer, um in eine geeignete Auslassgangstufe einzustellen, der elektronische Auslasssteuerschalter (21) wird betätigt, um die zentrale Steuereinrichtung das Elektromagnetventil (32) einschalten zu lassen, der Strömungsmesser beginnt zu zählen.

4. Die Auslasseinrichtung mit zwei Betriebsarten für elektronischen Auslass und mechanischen Auslass nach Anspruch 3, wobei der Volumenoptionsschalter (22) ein Drehring (22) ist, welcher an einer Seite des Auslassabschnitts der Auslasseinrichtung angeordnet ist, der Drehring (22) ist mit einem Volumeneinteilungslineal (221) angeordnet, der Auslassanschluss der Auslasseinrichtung ist mit einer Markierung (222) angeordnet; das Volumeneinteilungslineal (211) ist mit einer Skala angeordnet, die der unbegrenzten Auslassgangstufe entspricht, und einer Vielzahl von Skalen, die der rationierten Auslassgangstufe entsprechen, angeordnet; wenn sich der Drehring (22) dreht, um eine der Skalen mit der Markierung (222) ausrichten zu lassen, wird die entsprechende Auslassgangstufe ausgewählt.

5. Die Auslasseinrichtung mit zwei Betriebsarten für elektronischen Auslass und mechanischen Auslass nach Anspruch 4, wobei, wenn sich der Volumenoptionsschalter (22) zu einer Seite dreht, dreht sich der Kodierer zu der unbegrenzten Auslassgangstufe; wenn sich der Volumenoptionsschalter (22) zu der anderen Seite dreht, dreht sich der Kodierer zu einer der rationierten Auslassgangstufen.

6. Die Auslasseinrichtung mit zwei Betriebsarten für elektronischen Auslass und mechanischen Auslass nach einem oder mehreren der Ansprüche 3 bis 5, wobei, wenn der Kodierer sich zu der unbegrenzten Auslassgangstufe dreht, schaltet die zentrale Steuereinrichtung das Elektromagnetventil (32) in den normalen geschlossenen Zustand.

7. Die Auslasseinrichtung mit zwei Betriebsarten für elektronischen Auslass und mechanischen Auslass nach einem oder mehreren der Ansprüche 3 bis 6, wobei der elektronische Auslasssteuerschalter (21) einen Berührungsschalter aufweist; wenn der Kodierer in einer rationierten Auslassgangstufe angeordnet ist, ist Berühren des Berührungsschalters fähig, das Elektromagnetventil (32) anzuschalten, der Volumenmesser (33) beginnt zu zählen, wenn das Volumen den Einstellwert der rationierten Auslassgangstufe erreicht, steuert die zentrale Steuereinrichtung das Auslassventil zu schließen, um auszuschalten.

8. Die Auslasseinrichtung mit zwei Betriebsarten für elektronischen Auslass und mechanischen Auslass nach einem oder mehreren der Ansprüche 1 bis 7, insbesondere nach Anspruch 7, wobei der erste Auslassdurchlass einen Kaltwassereinlass, einen Heißwassereinlass und ein Mischwasserauslass aufweist; der Mischwasserauslass ist mit dem zweiten Auslassdurchlass verbunden, der Sensor (31) ist an dem Ende des Mischwasserauslasses des ersten Auslassdurchlass angeordnet.

9. Die Auslasseinrichtung mit zwei Betriebsarten für elektronischen Auslass und mechanischen Auslass nach Anspruch 8, wobei die mechanische Auslasssteuereinrichtung (1) einen Griff aufweist; wenn der Griff gedreht wird, ist der erste Auslassdurchlass offen, wenn der Griff kontinuierlich gedreht wird, nimmt der Anteil an kaltem Wasser des ersten Auslassdurchlass ab und der Anteil an heißem Wasser nimmt zu, um die Auslasstemperatur der Auslasseinrichtung zu erhöhen.

10. Die Auslasseinrichtung mit zwei Betriebsarten für elektronischen Auslass und mechanischen Auslass nach einem oder mehreren der Ansprüche 1 bis 9, insbesondere nach Anspruch 1 oder Anspruch 2, wobei die Auslasseinrichtung ein Hahn oder ein Duschkopf ist.

11. Die Auslasseinrichtung mit zwei Betriebsarten für elektronischen Auslass und mechanischen Auslass nach einem oder mehreren der Ansprüche 2 bis 10, wobei der Sensor (31) ein Winkelsensor oder ein Wegsensor ist.

## Revendications

1. Dispositif de sortie avec deux modes de sortie électronique et de sortie mécanique, dans lequel le dispositif de sortie comprend un dispositif de commande de sortie mécanique (1), un dispositif de commande de sortie électronique (2) et un module de commande centrale (3) ;
le module de commande centrale (3) comprend un premier passage de sortie commandé par le dispositif de commande de sortie mécanique (1), un second passage de sortie commandé par le dispositif de commande de sortie électronique (2) et une commande centrale ; le premier passage de sortie est disposé avec un capteur (31), le second passage de sortie est disposé avec une vanne électromagnétique (32) ;
lorsque le dispositif de commande de sortie mécanique (1) commande l'ouverture du premier passage de sortie, le capteur (31) détecte de l'eau s'écoulant dans le premier passage de sortie, que la vanne électromagnétique (32) s'ouvre ou non, la commande centrale bascule la vanne électromagnétique (32) vers l'état fermé normal, **caractérisé en ce que** le second passage de sortie est en outre disposé avec un débitmètre.

2. Dispositif de sortie avec deux modes de sortie électronique et de sortie mécanique, dans lequel le dispositif de sortie comprend un dispositif de commande de sortie mécanique (1), un dispositif de commande de sortie électronique (2) et un module de commande centrale (3) ;
le module de commande centrale (3) comprend un premier passage de sortie commandé par le dispositif de commande de sortie mécanique (1), un second passage de sortie commandé par le dispositif de commande de sortie électronique (2) et une commande centrale ; le dispositif de commande de sortie mécanique (1) est disposé avec un capteur (31), le second passage de sortie est disposé avec une vanne électromagnétique (32) ;
lorsque le dispositif de commande de sortie mécanique (1) commande l'ouverture du premier passage de sortie, le capteur (31) détecte un changement de position du dispositif de commande de sortie mécanique (1), que la vanne électromagnétique (32) s'ouvre ou non, la commande centrale bascule la vanne électromagnétique (32) vers l'état fermé normal, **caractérisé en ce que** le second passage de sortie est en outre disposé avec un débitmètre.

3. Dispositif de sortie avec deux modes de sortie électronique et de sortie mécanique selon la revendication 1 ou la revendication 2, dans lequel le dispositif de commande de sortie électronique (2) est disposé avec un commutateur de commande de sortie électronique (21) et un commutateur d'option de volume (22) ; une extrémité du second passage de sortie est une entrée d'eau froide, l'autre extrémité est une sortie reliée au dispositif de sortie ; le commutateur d'option de volume (22) est relié à un encodeur, l'encodeur est disposé avec un engrenage de sortie illimitée et une pluralité d'engrenages de sortie rationnée ;
le commutateur de commande de sortie électronique (21) et le commutateur d'option de volume (22) sont disposés indépendamment, le commutateur d'option de volume (22) commande l'encodeur pour engager un engrenage de sortie approprié, le commutateur de commande de sortie électronique (21) fonctionne pour que la commande centrale mette en marche la vanne électromagnétique (32), le débitmètre commence à compter.

4. Dispositif de sortie avec deux modes de sortie électronique et de sortie mécanique selon la revendication 3, dans lequel le commutateur d'option de volume (22) est une bague tournante (22) disposée d'un côté de la partie de sortie du dispositif de sortie, la bague tournante (22) est disposée avec une règle de graduation de volume (221), l'orifice de sortie du dispositif de sortie est disposé avec un marqueur (222) ; la règle de graduation de volume (211) est disposée avec une échelle correspondant à l'engrenage de sortie illimitée et une pluralité d'échelles correspondant à l'engrenage de sortie rationnée ; lorsque la bague tournante (22) tourne pour aligner l'une des échelles avec le marqueur (222), l'engrenage de sortie correspondant est sélectionné.

5. Dispositif de sortie avec deux modes de sortie électronique et de sortie mécanique selon la revendication 4, dans lequel lorsque le commutateur d'option de volume (22) tourne vers un côté, l'encodeur tourne vers l'engrenage de sortie illimitée ; lorsque le commutateur d'option de volume (22) tourne vers l'autre côté, l'encodeur tourne vers l'un des engrenages de sortie rationnée.

6. Dispositif de sortie avec deux modes de sortie électronique et de sortie mécanique selon l'une quelconque ou plusieurs des revendications 3 à 5, dans lequel lorsque l'encodeur tourne vers l'engrenage de sortie illimitée, la commande centrale bascule la vanne électromagnétique (32) vers l'état fermé normal.

7. Dispositif de sortie avec deux modes de sortie électronique et de sortie mécanique selon l'une quelconque ou plusieurs des revendications 3 à 6, dans lequel le commutateur de commande de sortie électronique (21) comprend un commutateur tactile ; lorsque l'encodeur est disposé dans un engrenage de sortie rationnée quelconque, un toucher du commutateur tactile est capable de mettre en marche la vanne électromagnétique (32), le débitmètre (33) commence à compter, lorsque le volume atteint la valeur de réglage de l'engrenage de sortie rationnée, la commande centrale commande la fermeture de la vanne de sortie pour s'arrêter.

8. Dispositif de sortie avec deux modes de sortie électronique et de sortie mécanique selon l'une quelconque ou plusieurs des revendications 1 à 7, en particulier selon la revendication 7, dans lequel le premier passage de sortie comprend une entrée d'eau froide, une entrée d'eau chaude et une sortie d'eau de mélange ; la sortie d'eau de mélange est reliée au second passage de sortie, le capteur (31) est disposé à l'extrémité de la sortie d'eau de mélange du premier passage de sortie.

9. Dispositif de sortie avec deux modes de sortie électronique et de sortie mécanique selon la revendication 8, dans lequel le dispositif de commande de sortie mécanique (1) comprend une manette ; lorsque la manette tourne, le premier passage de sortie est ouvert, en tournant en continu la manette, la proportion d'eau froide du premier passage de sortie diminue et la proportion d'eau chaude augmente pour faire augmenter la température de sortie du dispositif de sortie.

10. Dispositif de sortie avec deux modes de sortie électronique et de sortie mécanique selon l'une quelconque ou plusieurs des revendications 1 à 9, en particulier selon la revendication 1 ou la revendication 2, dans lequel le dispositif de sortie est un robinet ou une pomme de douche.

11. Dispositif de sortie avec deux modes de sortie électronique et de sortie mécanique selon l'une quelconque ou plusieurs des revendications 2 à 10, dans lequel le capteur (31) est un capteur d'angle ou un capteur de déplacement.
